# EUROPEAN PATENT SPECIFICATION

(11) **EP 3 382 252 B1**
(45) Date of publication and mention of the grant of the patent: **06.05.2020**
(21) Application number: 17163005.6
(22) Date of filing: 27.03.2017
(51) Int. Cl.: F16L 33/03, F16L 33/02

(54) **HOSE CLAMP**
SCHLAUCHSCHELLE
COLLIER DE TUYAU

(43) Date of publication of application: 03.10.2018
(73) Proprietor: Ford Global Technologies, LLC, Dearborn, MI 48126 (US)
(72) Inventor: çekin, Çagri, 34744 Kadiköy / Istanbul (TR); Özekmekçi, Sarp, 34770 Ümraniye - Istanbul (TR); Daydir, Özge, 34882 Kartal/istanbul (TR); Demiraslan, Hakan, 34887 Sancaktepe / ISTANBUL (TR); Das, Zafer, 41050 Izmit/Kocaeli (TR)
(74) Representative: Illing, Rolf

(56) References cited:
- GB-A- 1 333 333
- GB-A- 1 393 555
- US-A- 2 194 317

## Description

The present invention relates to a clamp for applying a clamping force against a hose (herein also referred to as a hose clamp) corresponding to the preamble of claim 1, suitable for attaching the hose to an end of a piping.

Hose clamps of various kinds for applying a clamping force against a hose, such as a rubber hose, and thus attaching the hose to an end of a piping are known in the art. In general, the hose clamp has a clamping position for tightening the hose against an outer wall of the pipe and a loosened position for allowing the end of the pipe to be inserted into the hose. Not only has the hose clamp to provide a firm fit of the hose on the piping but also to prevent leakage of the connection therebetween.

Two primary types of such hose clamps are known as constant tension clamps (also referred to as CT clamps) and pre-opened, pre-positioned clamps (also referred to as POPP clamps).

For example, US 2,194,317 A, GB 1 393 555 A, and GB 1 333 333 A each disclose a hose clamp having the features specified in the preamble of claim 1.

US 6,128,975 discloses inter alia a constant tension hose clamp comprising a loop of spring steel formed into a circular clamp body. The spring steel biases the clamp body into a clamping position having a reduced diametric dimension. The clamp body further comprises two disconnected circumferential end portions overlapping in the circumferential direction of the clamp body. Each of the two end portions forms a protrusion member extending radially outwardly with respect to the circumference of the clamp body. By pushing the protrusion members together by means of a special hose clamp pliers, the diameter of the clamp body expands (herein also referred to as a "loosened position" of the clamp) thereby allowing the hose clamp to be slid on and off the hose.

Various other types of hose clamps are disclosed in US 5,234,233. Among these, one embodiment shows a constant tension clamp which can be held in its loosened position by a removable bracket-shaped clip. In the loosened position in which a ring-shaped clamp body of the clamp has an enlarged diametric dimension, the removable clip encompasses two protrusion members formed on respective two circumferential overlapping ends of the ring-shaped clamp body. The protrusion members extend radially outwardly with respect to a circumference of the clamp body. In order to retain the clamp in its loosened position, the protrusion members are closely held together by the clip, thus allowing the clamp to be slid on the hose. After the clamp has been positioned on the hose and the piping has been inserted into the hose, the clip is once removed so that the clamp assumes its clamping position.

US 5,507,206 discloses a similar hose clamp and a hose clamp tool to remove a retaining cap from protrusion members formed on respective two circumferential overlapping ends of a ring-shaped clamp body. While the protrusion members are held together by the retaining cap, the clamp is retained in its loosened position having an enlarged diametric dimension. By removing the retaining cap with the help of the hose clamp tool, the clamp is brought into its clamping position.

US 6,899,360 B1 discloses an embodiment of a POPP clamp.

US 6,773,037 B2 discloses an embodiment of a worm drive clamp.

US 2005/0253025 A1 and US 9,383,041 B2 each disclose different embodiments of a holding clip for tubes, hoses and the like.

US 5,586,792 discloses a quick connector coupling for a fluid line comprising a female connector body in which a tubular male member is received.

While various mechanisms are used for connecting a hose to a piping, each having its specific advantages and disadvantages, there is still room for improvement.

In particular, some of the hose clamps described above require a specialized hose clamp tool for clamping and/or loosening the hose clamp. The use of such a hose clamp tool is inconvenient and time consuming. Moreover, the clamping and/or loosening operation by means of the tool is operator dependent, i.e. the operator manually operates the clamp tool thereby exerting a force on the hose clamp which may cause overstraining or damaging the hose clamp if the operation force exceeds a certain threshold which, in turn, will lead to an insufficient or undefined clamping force exerted by the hose clamp and leakage between the hose and the piping may occur.

In other above-described implementations of a hose clamp a retaining member, such as a clip or a flap, may be installed on the hose clamp which retains the loosened position of the hose clamp in order to facilitate installation of the clamp on the hose and allow convenient connection of the hose and clamp assembly to the piping. After the piping is inserted into the hose, the retaining member may be removed from the hose clamp once or may be plastically deformed, e.g. using a specialized tool, in order to let the clamp assume its clamping position. Thereafter, the clamp cannot be brought back to its loosened position again, at least not without the specialized tool, either because the retaining member is disconnected from the clamp or it is plastically deformed.

The present invention has the object to provide a clamp for applying a clamping force against a hose with an improved handling capability.

It is a particular object of the present invention to provide such a hose clamp that facilitates convenient installation and repositioning of the clamp on the hose, provides a firm and leakage-free connection between the hose and a piping inserted into the hose, provides an operator-independent clamping force, and, last but not least, is cost efficient.

These objects are achieved by a hose clamp having the features of claim 1. Further, particularly advantageous embodiments of the present invention are disclosed in the dependent claims.

It should be noted that the individual features listed in the description below can be combined in any technically meaningful way with each other and show further embodiments of the invention. The description of the invention is additionally characterized and specified particularly in connection with the figures.

Furthermore, within the meaning of the present invention it is to be understood that a combination of a first feature with a second feature using the term "and/or" shall comprise a first embodiment having only the first feature, a second embodiment having only the second feature, and a third embodiment having both the first and second features.

In an advantageous embodiment, the present invention discloses a clamp for applying a clamping force against a hose, e.g. a rubbery-elastic hose, comprising a ring-shaped clamp body of resilient material, e.g. a spring steel, wherein the clamp body comprises two circumferential end portions; and further comprising first and second protrusions extending radially outwardly from respective said end portions with respect to a circumference of the ring-shaped clamp body. According to the invention, the clamp further comprises a manually operable actuating member, particularly being operable by hand, wherein the actuating member is movably connected to the clamp body and/or to at least one of the first and second protrusions.

Said movable connection allows movement of the actuating member relative to at least one of the first and second protrusions, e.g. a rotating movement, a sliding movement, or a combination thereof, while at the same time it connects the actuating member to the clamp, i.e. to the clamp body or to at least one of the first and second protrusions or to the clamp body and at least one of the first and second protrusions. In other words, the actuating member is prevented from being disconnected from the clamp.

According to the invention, the actuating member is positionable between at least a first and a second actuating position thereby interacting with the first and second protrusions such that in the first actuating position the actuating member causes the clamp body to assume a clamping position having a reduced diametric dimension so that the clamp body is enabled to exert the clamping force against the hose, and in the second actuating position the actuating member causes the clamp body to assume a loosened position having an expanded diametric dimension so that installation of the clamp body on the hose is enabled. As the actuating member is adapted to interact with the first and second protrusions in both its first and second actuating positions, switching between the clamped and loosened position of the clamp body is always possible and it is achieved by means of the actuating member solely.

It is an advantage of this clamp that it facilitates convenient and quick installation and repositioning of the clamp on the hose without requiring a specialized tool which is beneficial in terms of installation convenience, complexity, component cost and assembly cost. The clamping position and the loosened position of the clamp can be easily attained by moving the actuating member between its first and second actuating positions, particularly by hand. Therefore, this switching movement is not limited to a certain number of repetitions, e.g. transforming the state of the clamp body from its loosened position into its clamping position only once, for example, by a one-time removal of the actuating member thereby disconnecting it from the clamp.

It is a further advantage for a manufacturer or a seller that the clamp according to the invention can be stored and/or shipped already positioned and robustly clamped on the hose, thus reducing the probability that the clamp will get lost during storage or shipping of such clamp and hose assembly. Therefore, the percentage of rejected parts by a recipient will decrease.

Preferably, corrosion-resistant materials may be used as a resilient material at least for the clamp body. The resilient material may be a metal, a metal alloy, a plastic material, or a combination thereof.

Preferably, the ring-shaped clamp body and the first and second protrusions may be integrally formed and may be manufactured from the same material. However, the invention is not limited thereto and the first and second protrusions and the clamp body may be made of different materials and may be separate parts connected to each other.

Further according to the invention, the clamp body has a resiliency such that it is biased towards its clamping position, wherein in its second actuating position the actuating member is enabled to exert an actuating force on the first and second protrusions against the spring force of the clamp body such that the clamp body assumes its loosened position, and wherein in its first actuating position the actuating member is enabled to release the actuating force on the first and second protrusions such that the clamp body automatically assumes its clamping position.

It is an advantage that the clamp body is biased towards its clamping position as this allows the creation of an operator-independent and well-defined clamping force of the clamp body against the hose, thus providing a firm and leakage-free connection between the hose and the piping inserted into the hose.

According to a further advantageous embodiment of the present invention, the actuating member comprises at least one engagement means adapted to co-operate, by means of a form-fit engagement, with at least one corresponding engagement means formed on the clamp body and/or on at least one of the first and second protrusions, the form-fit engagement being adapted to allow movement of the actuating member between its first and second actuating positions.

It is an advantage that such a form-fit engagement represents a simple structure for movably connecting the actuating member to the clamp, i.e. the clamp body and/or at least one of the first and second protrusions. In particular, this is beneficial in terms of component complexity and manufacturing cost.

According to yet a another advantageous embodiment of the present invention, the form-fit engagement is adapted to provide a stop for said movement of the actuating member in at least one of the first and second actuating positions.

It is an advantage that the actuating movement of the actuating member is limited in at least one of its first and second actuating positions, because in this way the clamp body will not get overstrained by the actuating movement of the actuating member carried out by an operator, thus achieving an operator-independent operation of the actuating member. For example, limiting the actuating movement of the actuating member at its first actuating position may effectively allow the creation of an operator-independent and well-defined clamping force of the clamp body against the hose, thus providing a firm and leakage-free connection between the hose and the piping inserted into the hose. On the other hand, limiting the actuating movement of the actuating member at its second actuating position may effectively prevent overstraining the clamp body in its loosened position.

Preferably, the form-fit engagement may be adapted to provide a stop in each of the first and second actuating positions of the actuating member, thus limiting the actuating movement at the first actuating position as well as at the second actuating position. This form-fit engagement may also provide a secure movable connection between the actuating member and the clamp, i.e. the clamp body and/or at least one of the first and second protrusions, such that the actuating member will not separate from the clamp.

According to yet another advantageous embodiment of the present invention, the actuating member comprises at least one projection as an engagement means and at least one of the first and second protrusions comprises an elongate opening as a corresponding engagement means through which the projection of the actuating member extends, wherein the elongate opening is oriented and confined such that it guides and limits the movement of the actuating member between its first and second actuating positions. In this way the elongate and confined opening enables movement of the actuating member between its first and second actuating positions along the direction in which the elongate opening extends and at the same time may provide stops at the respective first and second actuating positions to limit the movement of the actuating member at these positions.

It is an advantage that such a form-fit engagement is easy to realize which is beneficial in terms of component complexity and manufacturing costs.

According to another advantageous embodiment of the present invention, the actuating member comprises two projections and each of the first and second protrusions comprises the elongate opening, wherein each projection extends through a corresponding opening.

This is particularly advantageous, since the actuating member is guided symmetrically by both the first and second protrusions thus offering an exact and stable guidance of the actuating member while being operated and moved between its first and second actuating positions.

According to yet another advantageous embodiment of the present invention, the actuating member is slidable in a radial direction of the ring-shaped clamp body tangentially along the first and second protrusions, thereby interacting with the first and second protrusions, wherein the actuating member assumes its first and second actuating positions in an outermost and an innermost radial position, respectively, relative to the circumference of the ring-shaped clamp body.

It is an advantage that the actuating element is slidable in the radial direction as this offers convenient manipulation of the actuating member through pushing and pulling it by hand.

According to another advantageous embodiment of the present invention, the actuating member is at least partially interposed between the first and second protrusions. This allows simple and direct interaction between the actuating member and the first and second protrusions. Furthermore, the first and second protrusions may additionally support guiding the movement of the actuating member between its first and second actuating positions.

According to yet another advantageous embodiment of the present invention, at least the portion of the actuating member interposed between the first and second protrusions has a truncated cone-like shape. The cone-like shape allows a smooth tangential sliding movement of the actuating member along the first and second protrusions thus rendering the operation of the actuating member more convenient.

According to an alternative likewise advantageous embodiment of the present invention, at least the portion of the actuating member interposed between the first and second protrusions has a wedge-like shape. The wedge-like shape also allows a smooth tangential sliding movement of the actuating member along the first and second protrusions thus rendering the operation of the actuating member more convenient.

According to yet another advantageous embodiment of the present invention, the actuating member comprises gripping means adapted to be gripped by hand. Thus, convenient manipulation of the actuating member by hand is facilitated without requiring a high expenditure of force.

Preferably, the gripping means provides a pushing surface and/or at least one pulling edge which render the handling of the actuating member even more comfortable.

According to another advantageous embodiment of the present invention, the ring-shaped clamp body comprises a gap in the circumferential direction between its two circumferential end portions. In other words, the ring-shaped clamp body does not form a complete circle, i.e. the circumferential end portions of the clamp body do not overlap. Since the first and second protrusions extend radially outwardly from said respective circumferential end portions, consequently, the first and second protrusions are at least partially spaced apart from each other. Advantageously, the actuating member can be interposed between the first and second protrusions allowing simple and direct interaction with the first and second protrusions.

Particularly, in such a configuration, the actuating member may be adapted to push against both first and second protrusions when being moved into its second actuating position, thus forcing the two circumferential end portions of the clamp body apart thereby bringing the clamp body into its loosened position having an expanded diametric dimension.

According to yet another advantageous embodiment of the present invention, the ring-shaped clamp body comprises at least one tongue-shaped extension extending from at least one of the two circumferential end portions in a circumferential direction of the ring-shaped clamp body at least partially into the gap.

It is an advantage that the tongue-shaped extension at least partially closes the gap in the circumferential direction of the clamp body between its two circumferential end portions thus generating a sufficient clamping force of the clamp body against the hose even in the area of the gap. A firm and leakage-free connection between the hose and the piping inserted into the hose is assured.

According to still another advantageous embodiment of the present invention, the at least one tongue-shaped extension comprises a stopper portion extending radially outwardly with respect to the circumferential direction of the ring-shaped clamp body, wherein the actuating member in one of its first and second actuating positions abuts against the stopper portion, thus forming a stop for the actuating movement of the actuating member in the respective actuating position.

Further features and advantages of the present invention will become apparent from the following description of non-limiting embodiments of the invention which will be explained below with reference to the drawings. In the drawings
- FIG. 1: shows a perspective side view of a portion of a hydraulic fluid system comprising a fluid reservoir being connected to a hose using a clamp according to an embodiment of the present invention,
- FIG. 2: shows a perspective bottom view of the hydraulic fluid system of FIG. 1,
- FIG. 3: shows an enlarged perspective view of the clamp and hose assembly of FIG. 1,
- FIG. 4: shows an enlarged perspective front view of the clamp of FIG. 1,
- FIG. 5: shows a perspective front view of the clamp of FIG. 1 without an actuating member,
- FIG. 6: shows another perspective view of the clamp of FIG. 5 with a slightly different viewing angle than that shown in FIG. 5,
- FIG. 7: shows a perspective side view of only the actuating member of the clamp of FIG. 4,
- FIG. 8: shows a perspective side view of only an actuating member of a clamp according to another embodiment of the present invention,
- FIG. 9: shows a top view of a projection component of the actuating element of the clamp of FIG. 4, and
- FIG. 10: shows several perspective views (a), (b), (c), (d), and (e) of the clamp of FIG. 1 illustrating different installation steps of connecting the hose to the reservoir shown in FIG. 1 using the clamp according to an embodiment of the present invention.

In the different figures to which reference is made below, components or parts which are equivalent in terms of their function are always provided with the same reference symbols, so that these are generally described only once.

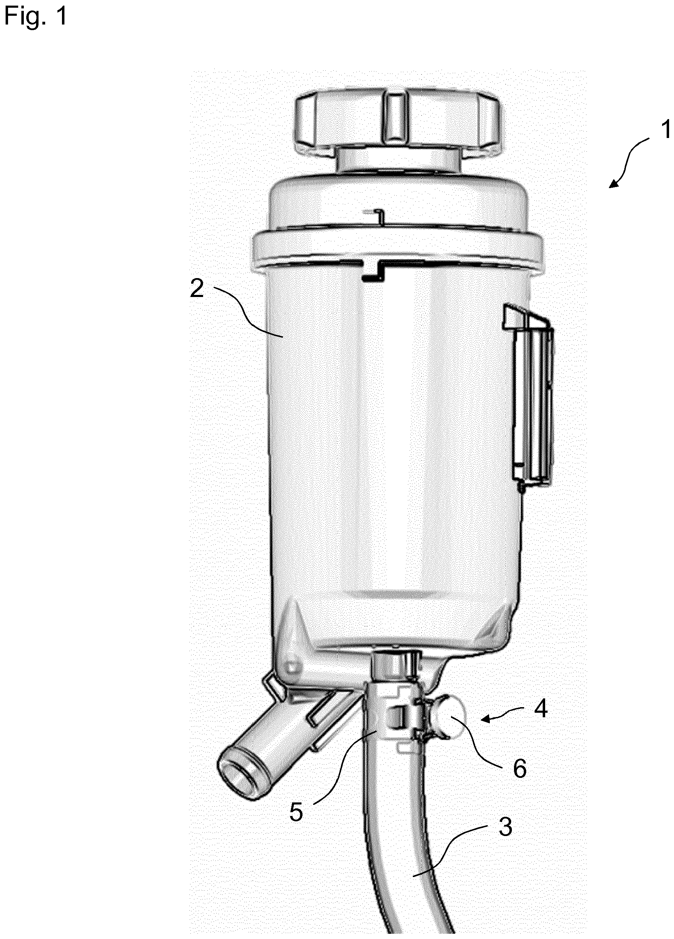

FIG. 1 shows a perspective side view of a portion of a hydraulic fluid system 1, e.g. a power assisted (hydraulic) steering system of a motor vehicle, comprising a fluid reservoir 2 containing a hydraulic fluid, e.g. oil, water, and the like. As can be seen in FIG. 1, the reservoir 2 is connected to a hose 3 using a clamp 4 according to an embodiment of the present invention.

As is known per se, the reservoir 2 comprises a piping or pipe-like socket (not visible) at its bottom, which is inserted into the hose 3 to form a connection between the reservoir 2 and the hose 3. In order to assure a firm and leakage-free connection between the piping of the reservoir 2 and the hose 3, the clamp 4 is positioned such, that it is firmly clamped against the hose 3 at the portion containing the piping of the reservoir 2.

FIG. 1 also shows that the clamp 4 comprises a ring-shaped clamp body 5 surrounding the hose 3 and exerting the clamping force against the hose 3 in the illustrated connected state, and a manually operable actuating member 6 that is adapted to be movable between at least a first and a second actuating position, wherein the first actuating position of the actuating member 6 causes the clamp body 5 to assume a clamping position having a reduced diametric dimension such that the clamp body 5 is enabled to exert the clamping force against the hose 3, and wherein the second actuating position of the actuating member 6 causes the clamp body 5 to assume a loosened position having an expanded diametric dimension such that installation of the clamp body 5 on the hose 3 is enabled. This will be explained in more detail further below.

The clamp body 5, which is made of a resilient material, is formed such that it provides a suitable mating interface on its interior surface with the outside surface of the hose 3 and, consequently, with the piping of the reservoir 2 in order to assure a firm and leakage-free connection therebetween. For example, the clamp body 5 may be manufactured from a spring steel band that is essentially formed into a cylinder. The band may have a closed structure or it may have one or several openings. Of course, the present invention is not limited to such a specific structure for the clamp body 5. Also, the clamp body 5 may be formed by two or more wires (generally known as "wire clamps" in the art) being arranged in loops so that the hose 3 will be surrounded by the wires once the clamp body is installed on the hose 3. Further, the resilient material of the clamp body 5 may be a metal, a metal alloy, a plastic material, or a combination thereof.

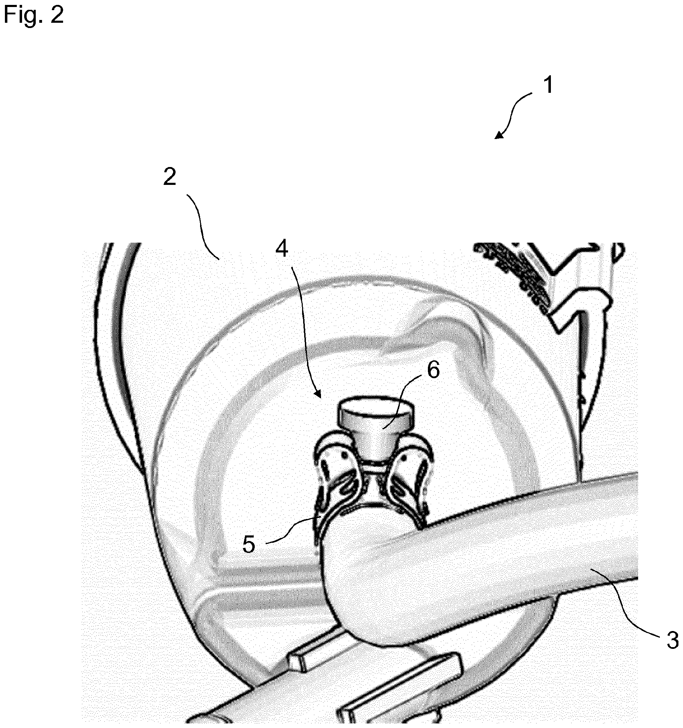

FIG. 2 shows a perspective bottom view of the hydraulic fluid system 1 of FIG. 1.

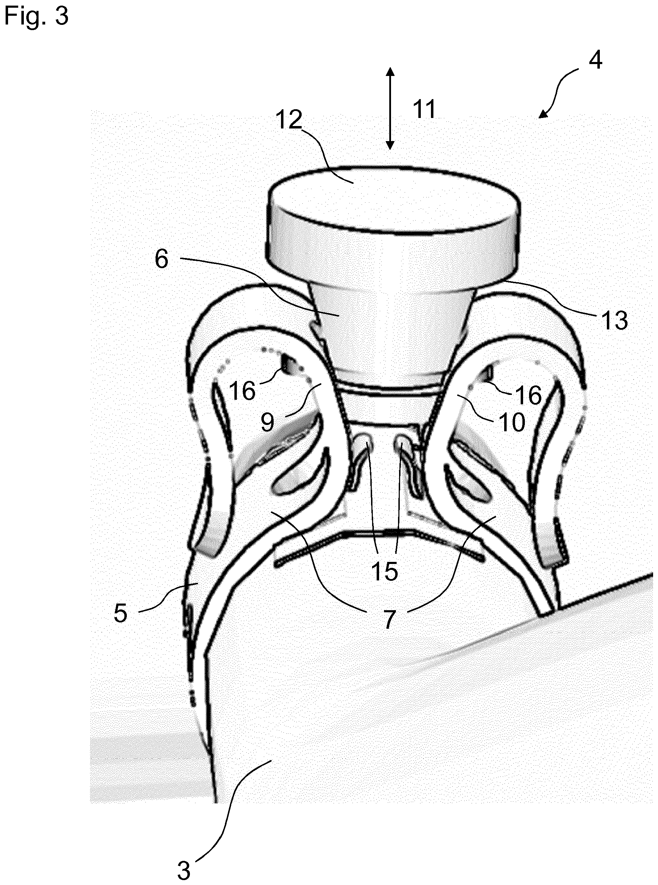

FIG. 3 shows an enlarged perspective view of the clamp 4 and hose 3 of FIG. 1.

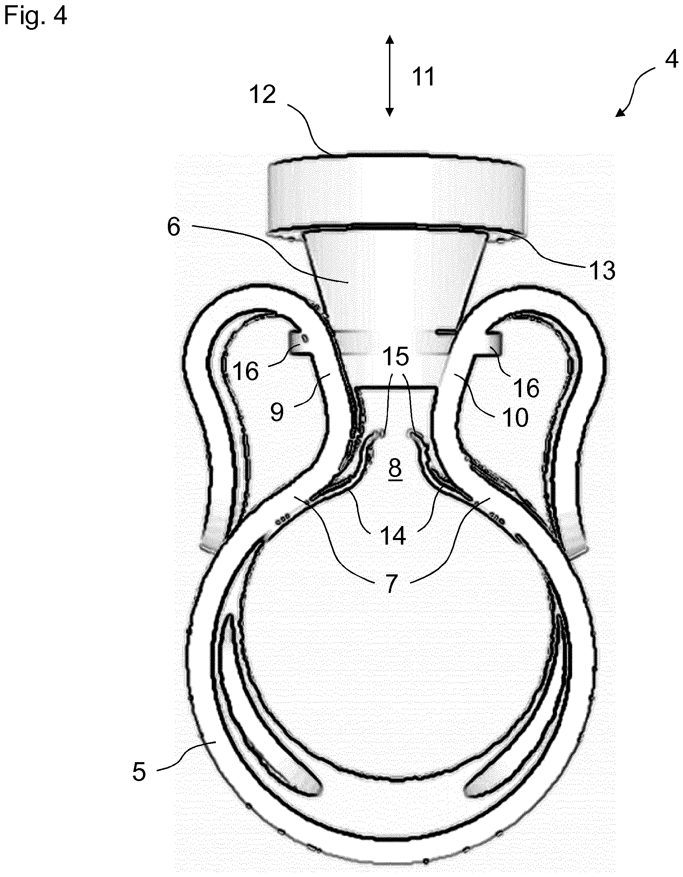

FIG. 4 shows an enlarged perspective front view of the clamp 4 of FIG. 1.

FIG. 3 and FIG. 4 clearly show the ring-shaped clamp body 5. The clamp body 5 comprises two circumferential end portions 7. Since the ring-shaped clamp body 5 of the illustrated embodiment does not form a complete circle of 360 °, the circumferential end portions 7 of the clamp body 5 do not overlap. Instead, in the clamp 4 illustrated in FIG. 3 and 4 the circumferential end portions 7 are arranged such that they face each other. A gap 8 is formed in the circumferential direction of the clamp body 5 between the two circumferential end portions 7.

Furthermore, FIG. 3 and 4 show that first and second protrusions 9, 10 extend radially outwardly from respective end portions 7 with respect to a circumference of the clamp body 5. In the embodiment of the clamp 4 the actuating member 6 is partially interposed between the first and second protrusions 9, 10 so that the actuating member 6 is able to directly interact with the first and second protrusions 9, 10.

FIG. 3 and 4 also show that each of the first and second protrusions 9, 10 is formed in an ear-like shape, i.e. in an intermediate upper section, according to the illustration of FIG. 3 and 4, they respectively extend in an outward direction with respect to the actuating member 6 interposed therebetween and in their respective end sections they each extend in a downward direction returning back to and abutting against an outer circumference of the clamp body 5. Thus, each of the first and second protrusions 9, 10 forms a closed loop rendering each of the first and second protrusions 9, 10 more sturdy with respect to the direction of the actuating force exerted to the first and second protrusions 9, 10 by the actuating member 6 and, additionally, provides a simple gripping means facilitating convenient handling of the clamp 4 by hand, e.g. during installation or repositioning of the clamp 4 on the hose 3.

As can be clearly seen in FIG. 3 and 4, the actuating member 6 has a truncated cone-like shape. The angle of inclination of the truncated cone is preferably selected such that the outer surface of the cone-like actuating member 6 extends at least partially parallel to the first and second protrusions 9, 10. This allows a smooth tangential sliding movement of the actuating member 6 along the first and second protrusions 9, 10 when the actuating member 6 is moved along its actuating direction 11 as will be described further below in more detail.

Further, the actuating member 6 comprises a button-shaped gripping means 12, 13 adapted to be easily gripped by hand. In particular, the gripping means provides a pushing surface 12 and a pulling edge 13. In order to move the actuating member 6 in a downward or radially inward direction towards the center axis of the clamp body 5, the pushing surface 12 may be pressed by hand, whereas the movement of the actuating member 6 in the opposite upward or radially outward direction may be carried out by pulling the actuating member 6 at its pulling edge 13 by hand.

Therefore, in the embodiment of the clamp 4 shown in FIG. 3 and 4 the actuating member 6 is slidable in the radial direction 11 of the ring-shaped clamp body 5 tangentially along the first and second protrusions 9, 10. In particular, the actuating member 6 assumes a first actuating position at an outermost radial position relative to the circumference of the ring-shaped clamp body 5. This first actuating positon is shown in FIG. 3 and 4. The actuating member 6 assumes a second actuating position at an innermost radial position relative to the circumference of the ring-shaped clamp body 5 (not shown in FIG. 3 and 4).

During the movement of the actuating member 6 along the actuating direction 11 the actuating member 6 interacts with the first and second protrusions 9, 10 such that the first actuating position of the actuating member 6 causes the clamp body 5 to assume the clamping position having a reduced diametric dimension so that the clamp body 5 is enabled to exert the clamping force against the hose 3 (e.g. see FIG. 1), and that the second actuating position of the actuating member 6 causes the clamp body 5 to assume the loosened position having an expanded diametric dimension so that installation of the clamp body 5 on the hose 3 is enabled.

In the embodiment of the clamp 4 shown in FIG. 3 and 4, the clamp body 5 has a resiliency such that it is biased towards its clamping position. Therefore, in its second actuating position (radially innermost position) the actuating member 6 exerts an actuating force on the first and second protrusions 9, 10 against the spring force of the clamp body 5 such that the clamp body assumes its loosened position having an expanded diametric dimension. In other words, in its second actuating positon the actuating member 6 pushes the first and second protrusions 9, 10 circumferentially outward, i.e. apart from each other. In its first actuating position (radially outermost position) shown in FIG. 3 and 4 the actuating member 6 releases the actuating force on the first and second protrusions 9, 10 such that the clamp body 5 automatically assumes its clamping position having a reduced diametric dimension due to the biasing force of the clamp body 5, i.e. the first and second protrusions 9, 10 move closer together.

As can further be observed in FIG. 3 and 4, the ring-shaped clamp body 5 of the illustrated embodiment of clamp 4 comprises two tongue-shaped extensions 14 each extending from the respective one of the two circumferential end portions 7 in a circumferential direction of the ring-shaped clamp body 5 partially into the gap 8 thus closing the gap 8 at least partially. Furthermore, the two tongue-shaped extensions 14 comprise a stopper portion 15 respectively extending radially outwardly with respect to the circumferential direction of the ring-shaped clamp body 5. In the illustrated example, the two stopper portions 15 may advantageously serve as a stop for the actuating movement of the actuating member 6 in its second actuating position (radially innermost position). In the second actuating position the actuating member 6, in particular the flat bottom surface of the truncated cone, abuts against these stopper portions 15 thus limiting further radially inward movement of the actuating member 6 towards the center axis of the clamp body 5.

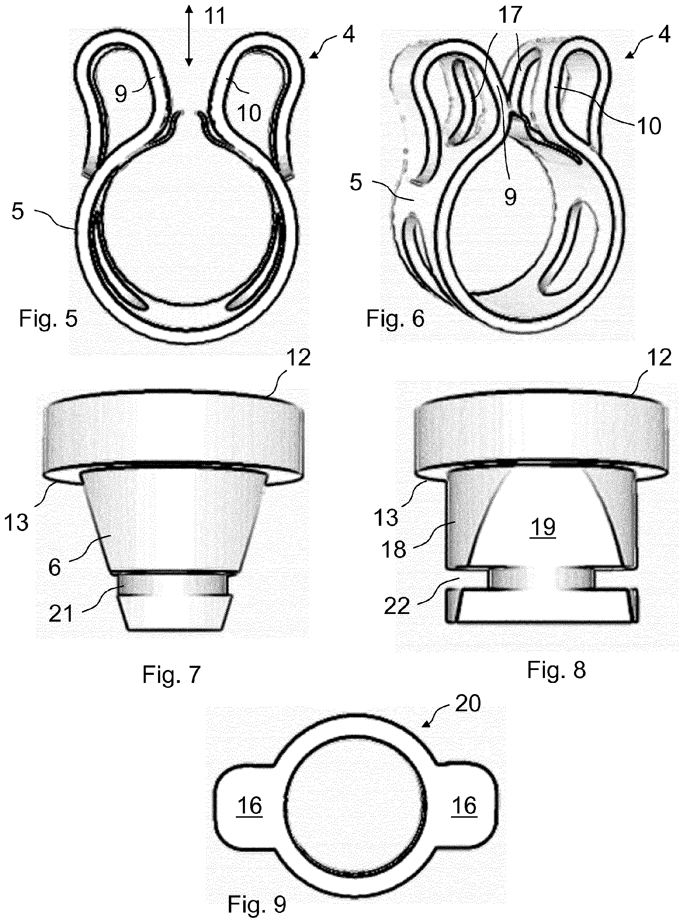

In FIG. 3 and 4 it is also shown that the actuating member 6 comprises two projections 16 as engagement means. The projections 16 are arranged diametrically opposed on the actuating member 6. These projections 16 are adapted to co-operate, by means of a form-fit engagement, with corresponding engagement means 17 (best seen in FIG. 6) formed on both of the first and second protrusions 9, 10.

FIG. 5 and 6 show different perspective views of the clamp 4 of FIG. 1, but without the actuating member 6. In FIG. 6 the corresponding engagement means 17 in the form of elongate openings 17 formed in each of the first and second protrusions 9, 10 are clearly visible. The openings 17 serve as the corresponding engagement means for the projections 16 (see FIG. 4) of the actuating member 6 as each projection 16 extends through the respective opening 17 and forms a form-fit engagement with respect to the actuating direction 11 of the actuating member 6.

As shown in FIG. 6, the elongate openings 17 are respectively oriented lengthwise in the same direction as the actuating direction 11 of the actuating member 6. As the openings 17 are oriented in this way and are confined, they guide and limit the movement of the actuating member 6 in the direction 11 between its first and second actuating positions. This simple form-fit engagement realized by the projections 16 of the actuating member 6 and the corresponding openings 17 formed in the first and second protrusions 9, 10 also prevents the actuating member 6 from being inadvertently disconnected from the clamp 4, thus providing a simple structure for movably connecting the actuating member 6 to the first and second protrusions 9, 10.

FIG. 7 shows a perspective side view of only the actuating member 6 of the clamp 4 of FIG. 4

FIG. 8 shows a perspective side view of only an actuating member 18 of a clamp (not shown) according to another embodiment of the present invention. Instead of a truncated cone-like shape of the actuating member 6 shown in FIG. 7, the actuating member 18 has a wedge-like shape. Only one wedge surface 19 is visible in FIG. 8. However, it is to be understood that the actuating member 18 preferably comprises a second wedge surface 19 having a similar or the same structure as the wedge surface 19 visible in FIG. 8 also on its backside (not visible in FIG. 8). The actuating member 18 may be interposed between first and second protrusions 9, 10 of a clamp (not shown) having the same structure as that of clamp 4 shown in FIG. 4. In this case, the actuating member 18 is oriented between the first and second protrusions 9, 10 such that the two wedge surfaces 19 abut against the respective first and second protrusions 9, 10 so as to be in a slidable contact therewith.

The angle of inclination of the two wedge surfaces 19 is preferably selected such that each wedge surface 19 of the actuating member 18 extends at least partially parallel to the first and second protrusions 9, 10, respectively. This allows a smooth tangential sliding movement of the actuating member 18 along the first and second protrusions 9, 10 when the actuating member 18 is moved in its actuating direction 11.

FIG. 9 shows a top view of a projection component 20 of the actuating element 6 of the clamp 4 of FIG. 4. The projection component 20 comprises the two projections 16 of the actuating member 6 shown, for example, in FIG. 4. As can be seen, in the example of the clamp 4 shown in FIG. 4 the projection component 20 illustrated in FIG. 9 may be a separate component that can be securely connected to the actuating member 6, e.g. by means of clipping, clamping, glueing, and the like.

Therefore, as is shown in FIG. 7, the actuating member 6 comprises a seating surface 21 adapted to receive part of the projection component 20 and securely attach it therewith.

As is also shown in FIG. 8, the actuating member 18 comprises a similar seating groove 22 that is adapted to receive part of the projection component 20, thus attaching it securely to the actuating member 18.

It is to be understood, that, while the projection component 20 shown in FIG. 9 represents a separate component providing the projections 16, the projections 16 may also be formed integrally with the actuating member 6 and 18, respectively.

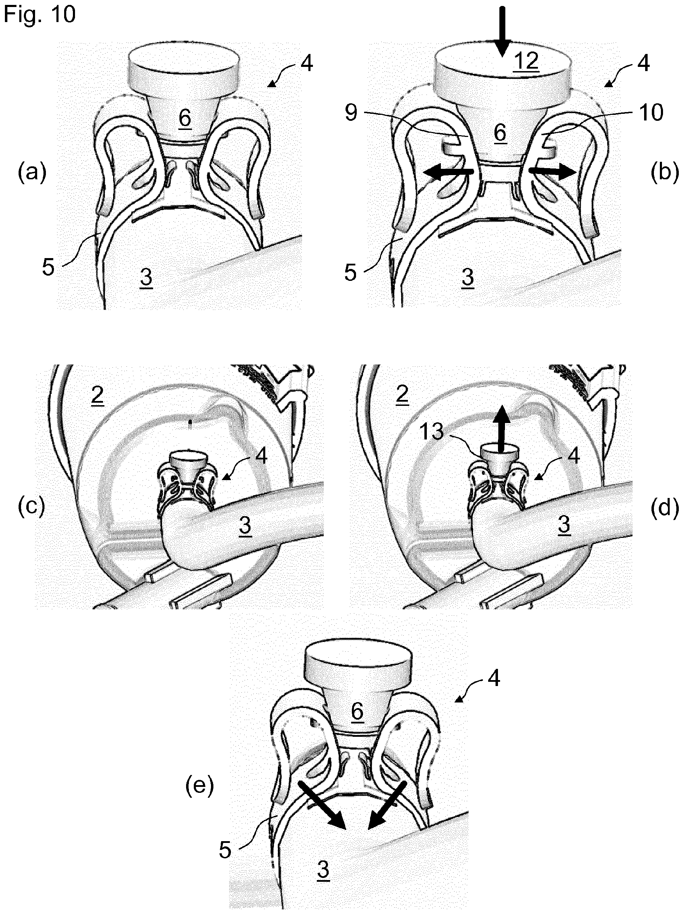

FIG. 10 shows several perspective views (a), (b), (c), (d), and (e) of the clamp 4 of FIG. 1 illustrating different installation steps of connecting the hose 3 to the reservoir 2 as shown in FIG. 1 using the clamp 4.

In FIG. 10(a) the clamp 4 is installed, i.e. clamped, on the hose 3. The actuating member 6 is positioned in its first actuating position (radially outermost position with respect to the circumference of the clamp body 5) so that the clamp body 5 assumes its clamping position. This configuration may advantageously be used to store and/or ship the clamp and hose assembly 3, 4.

FIG. 10(b) shows the state of the actuating member 6 after it has been pushed down or radially inwardly with respect to the circumference of the clamp body 5 into its second actuating position. For this, an operator may push the pushing surface 12 by hand as indicated by a corresponding bold arrow. During the movement of the actuating member 6 from its first actuating position (FIG. 10(a)) into its second actuating position shown in FIG. 10(b), the actuating member 6 interacts with the first and second protrusions 9, 10 in such a way that the first and second protrusions 9, 10 are pushed apart in a circumferential direction as indicated by two corresponding bold arrows in FIG. 10(b). This forces the clamp body 5 into its loosened position having an expanded diametric dimension which allows insertion of a piping or pipe-like socket (not shown) of the reservoir 2 into hose 3 as shown in FIG. 10(c).

After having established the connection between the hose 3 and the reservoir 2, the operator may release the actuating member 6 and/or may pull the actuating member 6 at its pulling edge 13 in order to move the actuating member 6 back again from its second actuating position shown in FIG. 10(b) and 10(c) into its first actuating position shown in FIG. 10(a), 10(d), and 10(e).

According to the illustration of FIG. 10(e), the resilient clamp body 5 biased into its clamping position as described above is again enabled to exert the required clamping force against the hose 3 to assure a firm and leakage-free connection between the hose 3 and the reservoir 2.

Preferably, the clamp according to the present invention may be used to connect rubbery-elastic low pressure hydraulic lines to a corresponding piping in a power assisted steering system of a motor vehicle. Of course, the clamp according to the present invention is not limited to such a use. Rather, it can be used in all applications requiring a firm and leakage-free connection between a hose, preferably a rubbery-elastic hose, and a piping.

### REFERENCE NUMERALS

- 1: hydraulic fluid system
- 2: fluid reservoir
- 3: hose
- 4: clamp
- 5: clamp body
- 6: actuating member
- 7: circumferential end portion of 5
- 8: gap
- 9: first protrusion
- 10: second protrusion
- 11: actuating direction of 6
- 12: pushing surface
- 13: pulling edge
- 14: tongue-shaped extension
- 15: stopper portion of 14
- 16: projection
- 17: elongate opening
- 18: actuating member
- 19: wedge surface
- 20: projection component
- 21: seating surface
- 22: seating groove

## Claims

1. A clamp for applying a clamping force against a hose (3), comprising:
- a ring-shaped clamp body (5) of resilient material, the clamp body (5) comprising two circumferential end portions (7);
- first (9) and second (10) protrusions extending radially outwardly from respective said end portions (7) with respect to a circumference of the clamp body (5); and
- a manually operable actuating member (6, 18) movably being connected to the clamp body (5) and/or to at least one of the first (9) and second (10) protrusions and being positionable between at least a first and a second actuating position thereby interacting with the first (9) and second (10) protrusions,
wherein the first actuating position of the actuating member (6, 18) causes the clamp body (5) to assume a clamping position having a reduced diametric dimension such that the clamp body (5) is enabled to exert the clamping force against the hose (3), and wherein the second actuating position of the actuating member (6, 18) causes the clamp body (5) to assume a loosened position having an expanded diametric dimension such that installation of the clamp body (5) on the hose (3) is enabled,
**characterized in that**
the clamp body (5) has a resiliency such that it is biased towards its clamping position, wherein in its second actuating position the actuating member (6, 18) is enabled to exert an actuating force on the first (9) and second (10) protrusions against the spring force of the clamp body (5) such that the clamp body assumes its loosened position, and wherein in its first actuating position the actuating member (6, 18) is enabled to release the actuating force on the first (9) and second (10) protrusions such that the clamp body (5) automatically assumes its clamping position.

2. The clamp according to claim 1, wherein the actuating member (6, 18) comprises at least one engagement means (16) adapted to co-operate, by means of a form-fit engagement, with at least one corresponding engagement means (17) formed on the clamp body (5) and/or on at least one of the first (9) and second (10) protrusions, the form-fit engagement being adapted to allow movement of the actuating member (6, 18) between its first and second actuating positions.

3. The clamp according to claim 2, wherein the form-fit engagement is adapted to provide a stop for said movement of the actuating member (6, 18) in at least one of the first and second actuating positions.

4. The clamp according to claim 2 or 3, wherein the actuating member (6, 18) comprises at least one projection (16) as an engagement means and at least one of the first (9) and second (10) protrusions comprises an elongate opening (17) as a corresponding engagement means through which the projection (16) of the actuating member (6, 18) extends, wherein the elongate opening (17) is oriented and confined such that it guides and limits the movement of the actuating member (6, 18) between its first and second actuating positions.

5. The clamp according to the previous claim, wherein the actuating member (6, 18) comprises two projections (16) and each of the first (9) and second (10) protrusions comprises the elongate opening (17), wherein each projection (16) extends through a corresponding opening (17).

6. The clamp according to any of the previous claims, wherein the actuating member (6, 18) is slidable in a radial direction of the ring-shaped clamp body (5) tangentially along the first (9) and second (10) protrusions, thereby interacting with the first (9) and second (10) protrusions, wherein the actuating member (6, 18) assumes its first and second actuating positions in an outermost and an innermost radial position, respectively, relative to the circumference of the ring-shaped clamp body (5).

7. The clamp according to any of the previous claims, wherein the actuating member (6, 18) is at least partially interposed between the first (9) and second (10) protrusions.

8. The clamp according to the previous claim, wherein at least the portion of the actuating member (6) interposed between the first (9) and second (10) protrusions has a truncated cone-like shape.

9. The clamp according to claim 7, wherein at least the portion of the actuating member (18) interposed between the first (9) and second (10) protrusions has a wedge-like shape.

10. The clamp according to any of the previous claims, wherein the actuating member (6, 18) comprises gripping means (12, 13) adapted to be gripped by hand.

11. The clamp according to the previous claim, wherein the gripping means (12, 13) provides a pushing surface (12) and/or at least one pulling edge (13).

12. The clamp according to any of the previous claims, wherein the ring-shaped clamp body (5) comprises a gap (8) in the circumferential direction between its two circumferential end portions (7).

13. The clamp according to the previous claim, wherein the ring-shaped clamp body (5) comprises at least one tongue-shaped extension (14) extending from at least one of the two circumferential end portions (7) in a circumferential direction of the ring-shaped clamp body (5) at least partially into the gap (8).

14. The clamp according to the previous claim, wherein the at least one tongue-shaped extension (14) comprises a stopper portion (15) extending radially outwardly with respect to the circumferential direction of the ring-shaped clamp body (5), wherein the actuating member (6, 18) in one of its first and second actuating positions abuts against the stopper portion (15).

## Patentansprüche

1. Schelle zum Aufbringen einer Klemmkraft auf einen Schlauch (3), Folgendes umfassend:
- einen ringförmigen Schellenkörper (5) aus einem elastischen Material, wobei der Schellenkörper (5) zwei umlaufende Endabschnitte (7) umfasst;
- einen ersten (9) und zweiten (10) Vorsprung, die sich von dem jeweiligen Endabschnitt (7) in Bezug zum Umfang des Schellenkörpers (5) radial nach außen erstrecken; und
- ein manuell betreibbares Betätigungselement (6, 18), das beweglich mit dem Schellenkörper (5) und/oder dem ersten (9) und/oder zweiten (10) Vorsprung verbunden ist und zwischen zumindest einer ersten und einer zweiten Betätigungsposition positionierbar ist und dadurch mit dem ersten (9) und zweiten (10) Vorsprung zusammenwirkt,
wobei die erste Betätigungsposition des Betätigungselements (6, 18) bewirkt, dass der Schellenkörper (5) eine Klemmposition, die eine verringerte Durchmesserabmessung aufweist, einnimmt, sodass zugelassen wird, dass der Schellenkörper (5) die Klemmkraft auf den Schlauch (3) ausüben kann, und wobei die zweite Betätigungsposition des Betätigungselements (6, 18) bewirkt, dass der Schellenkörper (5) eine gelockerte Position, die eine vergrößerte Durchmesserabmessung aufweist, einnimmt, sodass die Montage des Schellenkörpers (5) auf dem Schlauch (3) zugelassen wird,
**dadurch gekennzeichnet, dass**
der Schellenkörper (5) eine Elastizität aufweist, sodass er in Richtung seiner Klemmposition vorgespannt ist, wobei zugelassen wird, dass das Betätigungselement (6, 18) in seiner zweiten Betätigungsposition eine Betätigungskraft auf den ersten (9) und zweiten (10) Vorsprung gegen die Federkraft des Schellenkörpers (5) ausübt, sodass der Schellenkörper seine gelockerte Position einnimmt, und wobei zugelassen wird, dass das Betätigungselement (6, 18) in seiner ersten Betätigungsposition die Betätigungskraft auf den ersten (9) und zweiten (10) Vorsprung löst, sodass der Schellenkörper (5) automatisch seine Klemmposition einnimmt.

2. Schelle nach Anspruch 1, wobei das Betätigungselement (6, 18) mindestens eine Eingriffseinrichtung (16) umfasst, die dazu eingerichtet ist, mittels formschlüssigem Eingriff mit mindestens einer zugehörigen Eingriffseinrichtung (17), die auf dem Schellenkörper (5) und/oder dem ersten (9) und/oder zweiten (10) Vorsprung ausgebildet ist, zusammenzuwirken, wobei der formschlüssige Eingriff dazu eingerichtet ist, die Bewegung des Betätigungselements (6, 18) zwischen seiner ersten und zweiten Betätigungsposition zuzulassen.

3. Schelle nach Anspruch 2, wobei der formschlüssige Eingriff dazu eingerichtet ist, einen Anschlag für die Bewegung des Betätigungselements (6, 18) in der ersten und/oder zweiten Betätigungsposition vorzusehen.

4. Schelle nach Anspruch 2 oder 3, wobei das Betätigungselement (6, 18) mindestens einen Vorsprung (16) als Eingriffseinrichtung umfasst und der erste (9) und/oder zweite (10) Vorsprung eine längliche Öffnung (17) als zugehörige Eingriffseinrichtung umfasst, durch die sich der Vorsprung (16) des Betätigungselements (6, 18) erstreckt, wobei die längliche Öffnung (17) derart ausgerichtet und begrenzt ist, dass sie die Bewegung des Betätigungselements (6, 18) zwischen seiner ersten und zweiten Betätigungsposition führt und begrenzt.

5. Schelle nach dem vorstehenden Anspruch, wobei das Betätigungselement (6, 18) zwei Vorsprünge (16) umfasst und der erste (9) und zweite (10) Vorsprung jeweils die längliche Öffnung (17) umfassen, wobei sich jeder Vorsprung (16) durch eine zugehörige Öffnung (17) erstreckt.

6. Schelle nach einem der vorstehenden Ansprüche, wobei das Betätigungselement (6, 18) in eine Radialrichtung des ringförmigen Schellenkörpers (5) tangential entlang des ersten (9) und zweiten (10) Vorsprungs verschiebbar ist, wobei es mit dem ersten (9) und zweiten (10) Vorsprung zusammenwirkt, wobei das Betätigungselement (6, 18) seine erste und zweite Betätigungsposition in einer äußersten bzw. innersten radialen Position in Bezug zum Umfang des ringförmigen Schellenkörpers (5) einnimmt.

7. Schelle nach einem der vorstehenden Ansprüche, wobei das Betätigungselement (6, 18) zumindest teilweise zwischen dem ersten (9) und zweiten (10) Vorsprung angeordnet ist.

8. Schelle nach dem vorstehenden Anspruch, wobei zumindest der Abschnitt des Betätigungselements (6), der zwischen dem ersten (9) und zweiten (10) Vorsprung angeordnet ist, eine Kegelstumpfform aufweist.

9. Schelle nach Anspruch 7, wobei zumindest der Abschnitt des Betätigungselements (18), der zwischen dem ersten (9) und zweiten (10) Vorsprung angeordnet ist, eine Keilform aufweist.

10. Schelle nach einem der vorstehenden Ansprüche, wobei das Betätigungselement (6, 18) eine Greifeinrichtung (12, 13) umfasst, die dazu eingerichtet ist, mit der Hand gegriffen zu werden.

11. Schelle nach dem vorstehenden Anspruch, wobei die Greifeinrichtung (12, 13) eine Schubfläche (12) und/oder zumindest eine Zugkante (13) vorsieht.

12. Schelle nach einem der vorstehenden Ansprüche, wobei der ringförmige Schellenkörper (5) in Umfangsrichtung zwischen seinen zwei umlaufenden Endabschnitten (7) einen Spalt (8) umfasst.

13. Schelle nach dem vorstehenden Anspruch, wobei der ringförmige Schellenkörper (5) mindestens eine federförmige Verlängerung (14) umfasst, die sich von mindestens einem der zwei umlaufenden Endabschnitte (7) in Umfangsrichtung des ringförmigen Schellenkörpers (5) zumindest teilweise in den Spalt (8) erstreckt.

14. Schelle nach dem vorstehenden Anspruch, wobei die mindestens eine federförmige Verlängerung (14) einen Stopperabschnitt (15) umfasst, der sich in Bezug zur Umfangsrichtung des ringförmigen Schellenkörpers (5) radial nach außen erstreckt, wobei das Betätigungselement (6, 18) in seiner ersten oder zweiten Betätigungsposition an dem Stopperabschnitt (15) anschlägt.

## Revendications

1. Collier destiné à exercer une force de serrage contre un tuyau (3), comprenant:
- un corps de collier annulaire (5) en matériau élastique, le corps de collier (5) comprenant deux parties d'extrémité circonférentielles (7);
- des première (9) et seconde (10) saillies s'étendant radialement vers l'extérieur à partir desdites parties d'extrémité (7) respectives par rapport à une circonférence du corps de collier (5); et
- un élément d'actionnement (6, 18) actionnable manuellement, relié de manière mobile au corps de collier (5) et/ou à au moins une des première (9) et seconde (10) saillies et pouvant être positionné entre au moins une première et une seconde position d'actionnement, interagissant ainsi avec les première (9) et seconde (10) saillies,
la première position d'actionnement de l'élément d'actionnement (6, 18) amenant le corps de collier (5) à prendre une position de serrage ayant une dimension diamétrale réduite de telle sorte que le corps de collier (5) soit en mesure d'exercer la force de serrage contre le tuyau (3), et la seconde position d'actionnement de l'élément d'actionnement (6, 18) amenant le corps de collier (5) à prendre une position de desserrage ayant une dimension diamétrale élargie de telle sorte que l'installation du corps de collier (5) sur le tuyau (3) soit possible,
**caractérisé en ce que**
le corps de collier (5) présente une élasticité telle qu'il est sollicité vers sa position de serrage, dans sa seconde position d'actionnement, l'élément d'actionnement (6, 18) étant autorisé à exercer une force d'actionnement sur les première (9) et seconde (10) saillies à l'encontre de la force élastique du corps de collier (5) de telle sorte que le corps de collier prenne sa position de desserrage, et dans sa première position d'actionnement, l'élément d'actionnement (6, 18) étant autorisé à libérer la force d'actionnement sur les première (9) et seconde (10) saillies de sorte que le corps de collier (5) prenne automatiquement sa position de serrage.

2. Collier selon la revendication 1, l'élément d'actionnement (6, 18) comprenant au moins un moyen d'engagement (16) conçu de façon à coopérer, au moyen d'un engagement par complémentarité de forme, avec au moins un moyen d'engagement correspondant (17) formé sur le corps de collier (5) et/ou sur au moins une des première (9) et seconde (10) saillies, l'engagement par complémentarité de forme étant conçu de façon à permettre le mouvement de l'élément d'actionnement (6, 18) entre ses première et seconde positions d'actionnement.

3. Collier selon la revendication 2, l'engagement par complémentarité de forme étant conçu de façon à servir de butée pour ledit mouvement de l'élément d'actionnement (6, 18) dans au moins une des première et seconde positions d'actionnement.

4. Collier selon la revendication 2 ou 3, l'élément d'actionnement (6, 18) comprenant au moins une projection (16) comme moyen d'engagement et au moins une des première (9) et seconde (10) saillies comprenant une ouverture allongée (17) comme moyen d'engagement correspondant à travers laquelle s'étend la projection (16) de l'élément d'actionnement (6, 18), l'ouverture allongée (17) étant orientée et confinée de telle sorte qu'elle guide et limite le mouvement de l'élément d'actionnement (6, 18) entre ses première et seconde positions d'actionnement.

5. Collier selon la revendication précédente, l'élément d'actionnement (6, 18) comprenant deux projections (16) et chacune des première (9) et seconde (10) saillies comprenant l'ouverture allongée (17), chaque projection (16) s'étendant à travers une ouverture correspondante (17).

6. Collier selon l'une quelconque des revendications précédentes, l'élément d'actionnement (6, 18) pouvant coulisser dans une direction radiale du corps de collier annulaire (5) tangentiellement le long des première (9) et seconde (10) saillies, interagissant ainsi avec les première (9) et seconde (10) saillies, l'élément d'actionnement (6, 18) prenant ses première et seconde positions d'actionnement dans une position radiale la plus externe et la plus interne, respectivement, par rapport à la circonférence du corps de collier annulaire (5).

7. Collier selon l'une quelconque des revendications précédentes, l'élément d'actionnement (6, 18) étant au moins partiellement interposé entre les première (9) et seconde (10) saillies.

8. Collier selon la revendication précédente, au moins la partie de l'élément d'actionnement (6) interposée entre les première (9) et seconde (10) saillies ayant une forme tronconique.

9. Collier selon la revendication 7, au moins la partie de l'élément d'actionnement (18) interposée entre les première (9) et seconde (10) saillies ayant une forme de coin.

10. Collier selon l'une quelconque des revendications précédentes, l'élément d'actionnement (6, 18) comprenant des moyens de préhension (12, 13) conçus de façon à être saisis à la main.

11. Collier selon la revendication précédente, les moyens de préhension (12, 13) assurant une surface de poussée (12) et/ou au moins un bord de traction (13).

12. Collier selon l'une quelconque des revendications précédentes, le corps de collier annulaire (5) comprenant un espace (8) dans la direction circonférentielle entre ses deux parties d'extrémité circonférentielles (7).

13. Collier selon la revendication précédente, le corps de collier annulaire (5) comprenant au moins une extension en forme de languette (14) s'étendant depuis au moins l'une des deux parties d'extrémité circonférentielles (7) dans une direction circonférentielle du corps de collier annulaire (5) au moins partiellement dans l'espace (8).

14. Collier selon la revendication précédente, l'au moins une extension en forme de languette (14) comprenant une partie de butée (15) s'étendant radialement vers l'extérieur par rapport à la direction circonférentielle du corps de collier annulaire (5), l'élément d'actionnement (6, 18) dans l'une de ses première et seconde positions d'actionnement venant en butée contre la partie de butée (15).
